# FASCICULE DE BREVET EUROPEEN

(11) **EP 1 725 595 B1**
(45) Date de publication et mention de la délivrance du brevet: **11.07.2007**
(21) Numéro de dépôt: 05733983.0
(22) Date de dépôt: 03.03.2005
(51) Int. Cl.: C08F 246/00, C08F 230/02, C08F 2/22, C08F 212/08, C09D 5/08

(54) **DISPERSION AQUEUSE DE POLYMERE POUR REVETEMENT BARRIERE**
WÄSSRIGE POLYMERDISPERSION FÜR BARRIEREÜBERZUG
POLYMER AQUEOUS DISPERSION FOR A BARRIER COATING

(30) Priorité: 10.03.2004 FR 0402571
(43) Date de publication de la demande: 29.11.2006
(73) Titulaire: CRAY VALLEY SA, 92400 Courbevoie (FR)
(72) Inventeur: BETREMIEUX, Isabelle, F-60580 Coye La Foret (FR); DUQUE, Baudouin, B-1050 Bruxelles (BE); SAIJA, Leo, I-42011 Bagnolo in Piano (RE) (IT)
(74) Mandataire: Killis, Andréas
(86) Numéro de dépôt international: PCT/FR2005/000515
(87) Numéro de publication internationale: WO 2005/097853

(56) Documents cités:
- EP-A- 0 221 498
- EP-A- 1 193 298
- WO-A-88/02382
- US-A1- 2004 176 556

## Description

La présente invention concerne des dispersions aqueuses de polymère, de préférence de type styrène acrylique, pour la préparation de revêtements hydrophobes et protecteurs par effet barrière pour substrats métalliques ou plastiques; ledit revêtement, dont la formulation présente une stabilité satisfaisante, forme une barrière à la diffusion des agents corrosifs et de protection contre les agressions chimiques et/ou mécaniques, caractérisée par une adhérence durable.

La réglementation de plus en plus contraignante en matière d'utilisation de solvants organiques volatiles et le souci de produire des revêtements non agressifs pour l'environnement en général, conduisent dorénavant à utiliser de plus en plus des compositions de revêtements à base de dispersions aqueuses de polymères. D'autre part, la protection de substrats aussi variés que le métal ou les plastiques nécessite l'utilisation de revêtements à base de dispersions présentant notamment un excellent compromis de performances en termes d'adhérence, de résistance chimique et mécanique, et plus particulièrement, dans le cas de revêtements métalliques, une tenue élevée à la corrosion.

Quelques solutions sont déjà connues de l'état de l'art et plus particulièrement dans le domaine des dispersions aqueuses de polymères pour revêtements aqueux de protection des substrats métalliques. Cependant, ces revêtements n'atteignent pas le compromis de performances recherché par la présente invention.

EP 221 498 décrit l'utilisation dans des revêtements anticorrosion de dispersions aqueuses de polymères avec ou sans un taux réduit de tensioactifs grâce à l'introduction d'un comonomère alkyle phosphate copolymérisable. Ladite dispersion ne contient pas de monomères fonctionnels spécifiques, comme ceux de la présente invention nécessaires à l'obtention d'un compromis satisfaisant de performances, en particulier, en termes de qualité de dispersion pigmentaire ou d'adhérence.

Enfin, EP 1 193 298 décrit des dispersions aqueuses de polymères pour revêtements anticorrosion brillants, avec présence de monomères d'acides forts, ledit acide fort représentant plus de 45% en poids du total des acides. Toutefois, les revêtements obtenus présentent des insuffisances, en particulier en ce qui concerne la tenue au brouillard salin et la stabilité de la formulation du revêtement.

Cependant, aucun de ces documents de l'état de l'art ne propose de solution satisfaisante au problème de la protection par des revêtements pigmentés ou non pigmentés de substrats aussi variés que métaux et plastiques, tout en présentant un excellent compromis de performances en termes de stabilité de la formulation du revêtement, en particulier la stabilité de la dispersion pigmentaire, d'effet barrière de protection mécanique et/ou chimique et d'adhérence.

La présente invention remédie aux insuffisances et inconvénients des revêtements de l'état de l'art en proposant, au coeur de la présente invention, une dispersion aqueuse de polymère spécifique pour des revêtements de protection mécanique et/ou chimique pour substrats aussi variés que les métaux et les plastiques avec un meilleur compromis de performances à l'usage.

Ainsi, la dispersion aqueuse de polymère spécifique selon la présente invention convient particulièrement à la préparation de revêtements à caractère hydrophobe, de protection mécanique et/ou chimique, pigmentés ou non pigmentés, qui répondent de manière satisfaisante aux besoins et exigences suivantes :
- un bon effet barrière à l'eau et aux agents corrosifs,
- une bonne résistance chimique aux agents tels que les acides et les bases, les huiles et les graisses végétales ou minérales, y compris les carburants et les solvants organiques,
- un bon profil de propriétés mécaniques caractérisé par un bon compromis dureté / flexibilité,
- une bonne adhérence sur des substrats divers, plus particulièrement encore sur métal après exposition à des conditions sévères, en particulier l'exposition à l'humidité et aux ambiances corrosives, ladite adhérence leur assurant une protection durable,
- un effet inhibiteur de la rouille, dans le cas d'application sur substrats métalliques,
- et enfin, une bonne stabilité de la formulation du revêtement, tel que formulé pour l'application.

Le premier objet de la présente invention est une dispersion aqueuse de polymère, spécifique par la composition et proportions des monomères et autres composés impliqués. Cette dispersion peut être réticulable en fonction de sa composition lors de l'étape de filmification.

Un deuxième objet de l'invention concerne un procédé de préparation de ladite dispersion.

Un autre objet selon l'invention est une composition de revêtement comprenant au moins une dispersion aqueuse de polymère selon l'invention.

Un objet supplémentaire selon l'invention est l'utilisation desdites dispersions dans des compositions de revêtements de protection de substrats métalliques et/ou plastiques.

Enfin, le dernier objet de l'invention concerne de tels substrats revêtus par au moins une composition de revêtement telle que définie selon l'invention.

Le premier objet de l'invention est une dispersion aqueuse de polymère qui peut s'obtenir à partir d'un mélange de monomères, comprenant en poids :
a) 100 parties d'au moins un monomère éthyléniquement insaturé ne comportant pas de groupement ionique,
b) 0,5 à 15 parties, de préférence 1 à 10 et plus préférentiellement de 2 à 8, et encore plus préférentiellement 2 à 7, d'au moins un monomère éthyléniquement insaturé porteur d'au moins une fonction carboxylique et/ou anhydride carboxylique,
c) au moins un monomère éthyléniquement insaturé porteur d'au moins une deuxième fonctionnalité sélectionnée parmi : phosphate, phosphonate, phosphinate, en quantité telle que le rapport c / (b+c) varie de 0,05 à 0,4, de préférence de 0,1 à 0.4 et plus préférentiellement de 0.1 à 0,25,
d) 0 à 2 parties, de préférence 0,05 à 1,5 d'au moins un monomère éthyléniquement insaturé porteur d'au moins une fonction alcoxysilane,
e) 0 à 5 parties d'au moins un monomère éthyléniquement insaturé porteur d'au moins une fonction carbonyle actif ou d'une autre fonction réactive avec une fonction aldéhyde, telle un dérivé uréïdo, ou de la morpholine, de l'imidazoline, de l'oxazolidine, de l'aziridine, ou une fonction amine,
f) 0 à 10 parties, de préférence 2 à 8 d'au moins un monomère éthyléniquement insaturé porteur d'au moins une fonction sélectionnée parmi hydroxy et amine primaire ou secondaire ou d'un groupe précurseur d'une telle fonction.

Le monomère éthyléniquement insaturé type a), ne comportant pas de groupement ionique, peut être choisi en général parmi les monomères à caractère hydrophobe et plus particulièrement parmi : le styrène et ses dérivés comprenant les vinyltoluènes (ortho, méta, para), alpha-méthylstyrène, tert-butylstyrène, para-butylstyrène, para-décylstyrène, les esters (méth)acryliques d'alcools en C₁ à C₁₈, l'acrylonitrile, les esters vinyliques tels ceux de l'acide versatique. Ils sont préférentiellement sélectionnés parmi le styrène et ses dérivés, le (méth)acrylate de méthyle, le (méth)acrylate de butyle, en particulier le (méth)acrylate de n-iso-tert-butyle, l'acrylate de 2-éthylhexyle et l'acrylonitrile.

Comme exemple de monomère éthyléniquement insaturé type b) porteur d'au moins une fonction carboxylique et/ou anhydride carboxylique, on peut citer les suivants : acide (méth)acrylique, acide itaconique, acide fumarique, acide maléique, acide crotonique, acide isocrotonique, acide vinylbenzoïque et préférentiellement les acides (méth)acrylique, maléique, fumarique, itaconique et leurs anhydrides.

Le monomère éthyléniquement insaturé type c), porteur d'au moins une deuxième fonctionnalité peut être porteur d'une fonction de type phosphate, selon formule générale ci-dessous : 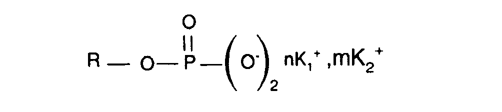 ou phosphonate 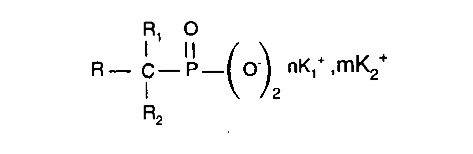 ou phosphinate 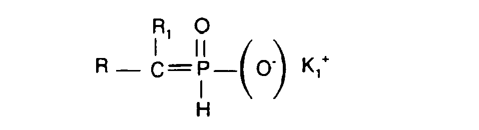 où :
- R est un radical organique, comprenant une insaturation éthylénique qui peut être (méth)acrylique, vinylique ou allylique. Ledit radical organique R peut comprendre en plus dans sa structure une chaîne polyalcoxylée, comprenant des unités alcoxy choisies parmi oxyéthylène (OE) et/ou oxypropylène (OP), de préférence oxyéthylène (OE) et avec un nombre d'unités alcoxy allant de 1 à 30, préférentiellement de 1 à 10,
- R₁ et R₂ pouvant être H, ou alkyle C₁-C₂,
- K₁⁺ et K₂⁺ sont un H⁺ ou un cation métallique alcalino-terreux monovalent, n et m sont chacun égaux à 0, 1 ou 2 tel que n + m = 2.

Des monomères de type c) plus particulier peuvent être sélectionnés parmi les (méth)acrylates d'alkyle et d'alkyle alcoxylés porteurs d'un groupe phosphate terminal qui, de préférence, est un mélange de monoester et de diester avec une prédominance en monoester, avec la nature et le nombre des unités alcoxy tels que définis ci-dessus pour le radical R, le monoester (méth)acrylate phosphate d'alkyle, de préférence le méthacrylate phosphate d'éthyle, les (méth)acrylates de polyoxyalkylènes, de préférence le monoester phosphorique du (2-méthacryloxy)éthyle et le monoester phosphorique du (méthacryloxy)polyoxyéthylène avec 1 à 10 unités éthoxy.

La composition de dispersion aqueuse peut comprendre jusqu'à 2, de préférence 0,1 à 1.5 parties pour 100 parties de a) d'au moins un monomère éthyléniquement insaturé d) porteur d'au moins une fonction alcoxysilane hydrolysable. Ce monomère est ajouté pendant la polymérisation et est choisi parmi les dérivés méthacryloxysilanés tels que gamma-méthacryloxypropyl- :
- triméthoxysilane, ou -triisopropoxysilane, ou -triéthoxysilane.

La dispersion aqueuse selon l'invention peut être réticulable par des réactions sélectives favorisées lors de l'étape de filmification. Dans un tel cas, elle peut comprendre en plus de 0 à 5 parties en poids d'au moins un composé polyfonctionnel portant au moins deux fonctions hydrazides ou amines ou aldéhydes ou d'un groupe précurseur d'une telle fonction additionnés après la préparation par polymérisation en émulsion de ladite dispersion. Un tel composé de type hydrazide peut être obtenu par réaction d'un polyacide carboxylique sur l'hydrazine et est préférentiellement de type acide adipique bishydrazide.

De même, la composition de dispersion aqueuse peut éventuellement contenir en plus, au moins un composé e) porteur d'au moins une fonction carbonyle actif ou d'une autre fonction réactive avec une fonction aldéhyde, telle un dérivé uréïdo, ou de la morpholine, de l'imidazoline, de l'oxazolidine, de l'aziridine, ou une fonction amine. La fonction carbonyle actif est définie comme une fonction carbonyle de type cétonique ou aldéhyde non énolique telle que présente dans la (méth)acroléïne, la méthyl vinyl cétone et la diacétone acrylamide, ou de type énolique, comme dans les (méth)acrylates ou (méth)acrylamides d'acétoacétoxyalkyle ou les (méth)acrylates ou (méth)acrylamides d'acétoacétamidoalkyle, comme par exemple le (méth)acrylate d'acétoacétoxyéthyl et le méthacrylate d'acétoacétoxyamidoéthyl. Le composé type e) porteur d'un groupe carbonyle actif ou d'une autre fonction réactive avec une fonction aldéhyde, est de préférence choisi parmi la diacétone acrylamide (DAAM) et le méthacrylate d'acétoacétoxyéthyle (MAAE). Lesdites fonctions réactives avec une fonction aldéhyde sont définies dans US 2004/0198903A1 au § 11. Les composés de type e) comportent, outre les composés du type MAAE, les dérivés de type uréïdo, tel le méthacrylate de 2-éthylène-uréïdoéthyl ou le (méth)acrylate de 2-uréïdoéthyl, ou encore les dérivés de la morpholine, telle la morpholinone-2 de N-(2-(méth)acryloxyéthyl)), de l'imidazoline, tel le 2-méthyl-1-vinyl-2-imidazoline, de l'oxazolidine, tel le (méth)acrylate de 2-(3-oxazolidinyl)éthyl, de l'aziridine ou une fonction amine, tel le méthacrylate de diméthylaminoéthyle (MADAME).

La présence du composé e) porteur d'au moins une fonction carbonyle actif ou d'une autre fonction réactive avec une fonction aldéhyde, dans une composition contenant déjà le composé polyfonctionnel cité ci-dessus, est susceptible de contribuer aux propriétés d'adhérence du film sur certains substrats. Elle peut aussi donner lieu à une réaction avec un composé polyfonctionnel hydrosoluble ou hydrodispersible :
- portant au moins 2 fonctions hydrazides ou amines ou aldéhydes ou d'un groupe précurseur d'une telle fonction, pouvant réagir avec une fonction carbonyle actif dans le cas où cette dernière est définie comme une fonction carbonyle de type cétonique ou non énolique, ou
- portant au moins 2 fonctions hydrazides ou amines ou d'un groupe précurseur d'une telle fonction, pouvant réagir avec une fonction carbonyle actif dans le cas où cette dernière est définie comme une fonction carbonyle de type énolique, ou
- portant au moins 2 fonctions aldéhydes ou d'un groupe précurseur d'une telle fonction, pouvant réagir avec une autre fonction réactive tel un dérivé uréïdo ou de la morpholine, de l'imidazoline, de l'oxazolidine, de l'aziridine ou une fonction amine,
lequel composé hydrosoluble ou hydrodispersible aura été ajouté à la dispersion polymérique en cours ou après polymérisation. Cette réaction, favorisée lors de la filmification, conduit à une réticulation des polymères de la dispersion, améliorant ainsi la résistance chimique et mécanique et les propriétés protectrices du revêtement. Le composé de type hydrazide peut être obtenu par réaction d'un polyacide carboxylique sur l'hydrazine et est préférentiellement de type acide adipique bishydrazide.

De même, la présence dans le mélange de monomères de la dispersion, d'un monomère f) éthyléniquement insaturé porteur d'une fonction hydroxyle ou d'une fonction amine primaire ou secondaire ou d'un groupe précurseur d'une telle fonction, peut permettre la réticulation du film de revêtement lors du séchage par addition d'autres composés réactifs fonctionnels de type polyisocyanate, résine mélamine-formaldéhyde, (poly)époxy, alcoxysilane polyfonctionnel tel un époxy alcoxysilane. La réticulation externe peut également être apportée par une polyaziridine ou un carbodiimide qui réagit aussi avec les groupes carboxyliques présents dans le polymère en dispersion. Ces composés co-réactifs sont généralement introduits dans la composition de revêtement lors de sa réalisation ou juste avant usage.

Parmi les monomères éthyléniquement insaturés préférés, on peut citer le méthacrylate de tertiobutyl amino éthanol (MATBAE) et les méth)acrylates d'hydroxyalkyle de préférence avec alkyle en C₂-C₄ tel que le méthacrylate de 2-hydroxyéthyl (HEMA).

Les additifs alcoxysilanes comportent au moins un groupe Si-O-C hydrolysable et un groupe Si-O-X, où X porte un groupe organique réactif avec une fonction portée par le polymère de ladite dispersion, de préférence un groupe époxy ou amino. Parmi les époxy silanes, on citera le gamma-glycidoxypropyl triméthoxysilane et le beta-(3,4-epoxycyclohexyl)-éthyl-triméthoxysilane, et parmi les amino silanes la bis-[gamma-(triméthoxysilyl) propyl] amine, le N-(beta-aminoéthyl)-gamma-aminopropyl méthyldiméthoxysilane, le N-phényl-gamma-aminopropyl triméthoxysilane, le gamma-aminopropyl triéthoxysilane, les solutions aqueuses d'aminoalkyle silicone, le gamma-aminopropyl-triméthoxysilane, le N-(beta-aminoéthyl)-gamma-aminopropyl triméthoxysilane, triamino-silane organofonctionnel. Ces additifs peuvent être ajoutés soit après la polymérisation et le refroidissement de la dispersion, soit lors de la réalisation de la composition de revêtement.

La polymérisation de la dispersion aqueuse peut être réalisée suivant un procédé en émulsion semi-continu connu de l'homme du métier. Lors de la réaction, interviennent également des matières premières diverses présentes dans la composition telles qu'au moins un amorceur de polymérisation radicalaire courant et au moins un tensioactif.

Ce dernier peut être de type anionique ou non ionique ou bien une combinaison d'au moins un tensioactif anionique et d'au moins un tensioactif non ionique. De préférence, il est présent à un taux global allant de 0,5 à 5 et plus préférentiellement de 1 à 3 parties pour 100 parties de a). Ledit tensioactif peut comporter une insaturation alpha-beta éthylénique le rendant copolymérisable avec les monomères a), b), c), d), e) et f).

Les tensioactifs anioniques sont sélectionnés parmi les sulfates, éthers sulfates, sulfonates ou phosphates d'alcools gras alcoxylés. De même, les tensioactifs non ioniques sont sélectionnés parmi les alcools gras éthoxylés, les dérivés d'alkyle phénol éthoxylés, les copolymères d'oxyde d'éthylène et d'oxyde de propylène. Les tensioactifs peuvent également être une combinaison d'au moins un tensioactif anionique et d'au moins un tensioactif non ionique tels que décrits précédemment.

Les tensioactifs anioniques préférés sont choisis parmi les phosphates d'alkyle alcoxylés où les unités alcoxy sont de type éthoxy et/ou propoxy de structure type suivante :

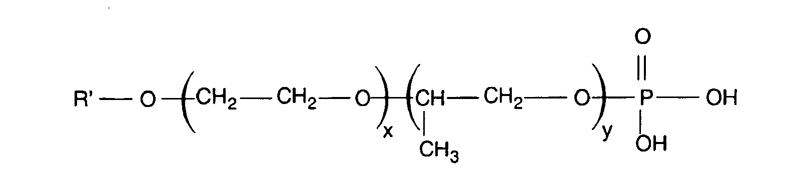

Le groupement R' peut être le résidu alkyle d'un alcool gras pouvant comporter une insaturation alpha-béta éthylénique et dont la chaîne peut être linéaire ou ramifiée. Il comporte une distribution de chaîne hydrocarbonée dont le nombre de carbone peut varier de 8 à 18.

R' est préférentiellement le résidu d'un alcool gras saturé comportant un nombre de carbone allant de 12 à 14.

Les tensioactifs préférés sont de type polyéther ester phosphate d'alkyle alcoxylé avec R' en C₁₂, C₁₃ ou C₁₄, ledit alcoxy étant un oxyéthylène.

Le groupement R' peut également être un dérivé de type alkyle phénol éthoxylé, le plus souvent nonyl ou octyl phénol éthoxylé.

Le groupement alcoxylé peut être soit de type polyoxyéthylé (x motifs), polyoxypropylé (y motifs) ou un copolymère contenant un bloc polyoxyéthylé et un bloc polyoxypropylé, comme les tensioactifs polymères biséquencés ou triséquencés Pluronic commercialisés par BASF.
x est compris entre 0 et 50.
y est compris entre 0 et 50.
y / (x+y) est compris entre 0 et 1.

Le taux de tensioactif dans la composition de la dispersion peut varier de 0,5 à 5 parties en poids par rapport à 100 parties de a) et préférentiellement de 1 à 3 parties en poids. Il détermine, entre autres, la taille des particules de la dispersion.

Dans cette plage de taux, la taille des particules varie de 50 à 200 nm, de préférence de 70 à 200 nm et encore plus préférentiellement de 80 à 120 nm.

Le taux de neutralisation des deux fonctions acide du groupe phosphate des tensioactifs, est ajusté avant et pendant la synthèse grâce au contrôle du pH. Les polymérisations se font préférentiellement entre pH = 2,5 et 9, de façon à ce qu'au moins une des fonctions acide du groupe phosphate soit partiellement neutralisée.

L'agent de neutralisation des fonctions phosphates est une base choisie parmi les hydroxydes de potassium, sodium, ammonium, les carbonates ou hydrogéno carbonate de potassium, sodium, ammonium, les amines ou alcools amines. Les bases préférées sont les amines volatiles telles que l'ammoniaque ou les agents de neutralisation se décomposant sans laisser de résidus inorganiques, sensibles à l'eau après l'étape de séchage du film de peinture tel que le carbonate d'ammonium.

Les amorceurs de polymérisation sont des amorceurs de polymérisation radicalaire de préférence hydrosolubles tels que les persulfates de sodium, de potassium ou d'ammonium, utilisés seuls ou en présence d'agents réducteurs tel que les métabisulfites ou hydrosulfites de sodium, le thiosulfate de sodium, le formaldéhyde sulfoxylate de sodium, un mélange de sel disodique de 2-hydroxy-2-sulfinoacide acétique, de sulfite de sodium et de sel disodique de 2-hydroxy-2-sulfoacide acétique ou encore un mélange de sel disodique de l'hydroxysulfino d'acide acétique et de sel disodique de l'hydroxysulfo d'acide acétique commercialisés respectivement sous les noms de Bruggolite^{®} FF6 et Bruggolite^{®} FF7 par la société Brüggemann.

Des amorceurs de polymérisation radicalaire liposolubles ou partiellement liposolubles peuvent également être utilisés. Parmi ces amorceurs, on trouvera des peroxydes ou hydroperoxydes et des dérivés de l'azobisisobutyronitrile. Les peroxydes ou hydroperoxydes sont utilisés en combinaison avec les agents réducteurs décrits précédemment de façon à baisser leur température d'activation.

Selon une variante de l'invention, ladite dispersion comporte au moins deux polymères distincts de température de transition vitreuse Tg correspondantes différentes :
- soit sous forme de mélanges de particules de polymères distincts,
- soit sous forme de particules structurées, constituées d'au moins deux phases de polymères distincts.

Selon une autre variante préférée de ladite dispersion, toujours selon l'invention, lesdites particules de la dispersion de polymère sont structurées selon une structure coeur / écorce et avec au moins un des monomères b) ou c) ou d) ou e) ou f) présent en prédominance dans l'une desdites phases. Ainsi, ils peuvent se retrouver en prédominance dans l'écorce ou dans le coeur de la particule suivant l'application et fonction finale recherchée.

Une autre possibilité particulière selon l'invention est une dispersion qui peut être obtenue :
- soit par mélange d'au moins 2 dispersions de polymères de Tg et de fonctionnalités distinctes,
- soit dans le cas de particules structurées, par un procédé de polymérisation comportant au moins deux étapes successives avec des compositions de monomères distinctes.

Le deuxième objet de l'invention concerne un procédé de préparation spécifique de la dispersion aqueuse selon l'invention telle que définie ci-dessus. En général, cette dispersion peut être obtenue selon un procédé de polymérisation en émulsion semi-continu à des températures pouvant varier de 60 à 90°C, et de préférence de 65 à 85°C.

Plus particulièrement, la dispersion selon l'invention peut être obtenue par un procédé spécifique qui peut comprendre au moins les étapes suivantes :
i) polymérisation d'au moins une composition de monomères telle que définie selon l'invention,
ii) en option, mélange d'au moins deux dispersions aqueuses obtenues selon l'étape i) et chacune de ces dispersions comprenant des polymères de Tg différentes.

Une autre variante du procédé spécifique de préparation comprend au moins les étapes suivantes :
i) polymérisation en au moins une étape d'une composition de monomères telle que définie selon l'invention,
ii) polymérisation en au moins une étape d'au moins une deuxième composition de monomères telle que définie selon l'invention, cette deuxième composition pouvant donner un polymère de Tg différente de celle de l'étape i), et/ou comporter au moins un des monomères b) ou c) ou d) ou e) ou f) en proportion prédominante dans l'une desdites compositions de monomères.

Lors d'une première étape, la nucléation des particules de polymère peut être réalisée in situ en faisant une introduction en discontinu (batch) d'une faible proportion des monomères engagés pour le procédé complet et d'une quantité suffisante d'amorceur radicalaire ou d'une semence préparée au préalable. Il est également possible de démarrer directement la deuxième étape sans passer par une étape de nucléation.

La deuxième étape consiste en une coulée en semi continu d'une solution ou d'une pré-émulsion de monomères et d'une solution d'amorceur radicalaire. Cette deuxième étape peut d'ailleurs être subdivisée en plusieurs sous-étapes lors de l'alimentation du milieu réactionnel en mélange de monomères. La composition de ce dernier peut être variable selon que l'objectif est de faire varier la température de transition vitreuse Tg de la composition finale, d'optimiser la répartition des monomères fonctionnels tels que les monomères acides forts et faibles déjà décrits ainsi que les monomères réticulants tels que les monomères éthyléniquement insaturés porteurs de groupes alcoxysilanes, les monomères insaturés à carbonyle actif tels que la diacétone acrylamide ou les monomères insaturés hydroxylés ou aminés, ou bien d'obtenir une température de filmification du latex basse afin de réduire le taux d'agent coalescent en formulation.

Ainsi une température de filmification du latex inférieure à 20°C peut être obtenue lors de la polymérisation en émulsion, en alimentant successivement au moins deux mélanges de monomères A et B de Tg A et Tg B différentes, répondant aux caractéristiques suivantes :
- 50°C < Tg A < 30°C
40°C < Tg B < 130°C
où :
- A représente entre 45 et 90% de la composition monomérique totale,
- B représente entre 10 et 55% de la composition monomérique totale.

A peut être alimenté avant B ou l'inverse en fonction de la structure de particule souhaitée.

De même, afin d'obtenir le meilleur compromis entre hydrophobie ou résistance à l'eau et formulabilité de formulations typiques d'applications anticorrosion, il peut être avantageux d'optimiser l'efficacité des monomères fonctionnels. Ainsi, on peut choisir d'introduire les monomères réticulants tels que la diacétone acrylamide ou les silanes au début de la coulée de monomères afin de les concentrer au coeur des particules. En revanche, pour assurer une bonne dispersion pigmentaire, il peut être intéressant d'introduire ces monomères à la fin de l'alimentation en monomères de façon à les concentrer à la surface des particules.

La troisième étape du procédé concerne la réduction des monomères résiduels dans la composition finale. Celle-ci est réalisée en alimentant en semi continu diverses solutions d'amorceurs radicalaires en présence ou pas d'activateur qui sont des réducteurs tels que décrits précédemment.

Le mélange réactionnel est ensuite refroidi lors de la dernière étape du procédé. Lorsqu'il atteint une température inférieure à 40°C. il est neutralisé à pH > 7 à l'aide d'un agent de neutralisation. L'agent de neutralisation est une base choisie parmi les hydroxydes de potassium, sodium, ammonium, les amines ou alcools amines. Les bases préférées sont les amines volatiles telles que la monoéthylamine, la triéthylamine et préférentiellement l'ammoniaque.

Après refroidissement sont également ajoutés, le cas échéant, les additifs de type hydrazide, amine, aldéhyde ou encore alcoxysilane. Ces derniers sont introduits selon un procédé particulier ; ils sont en effet mis au préalable en émulsion dans l'eau grâce à un système tensioactif analogue à celui utilisé pendant la polymérisation.

Un autre objet de l'invention concerne une composition de revêtement comprenant au moins une dispersion aqueuse selon l'invention. Cette composition peut être pigmentée ou non pigmentée de type primaire et/ou finition contenant la dispersion de l'invention. Ledit revêtement est un revêtement protecteur pour substrats métalliques, plastiques ou un revêtement primaire d'adhérence ou primaire anticorrosion ou peinture anticorrosion. Plus particulièrement, ledit revêtement est un revêtement qui peut être appliqué en au moins une couche, et de préférence un revêtement pigmenté.

Le revêtement peut être formulé à partir d'une dispersion monocomposante telle que définie par l'invention. Ainsi, dans certains cas, les monomères éthyléniquement insaturés porteurs d'au moins une fonction carbonyle actif et plus particulièrement les monomères de type diacétone acrylamide ou méthacrylate d'éthyle acétoacétoxy, peuvent réticuler avec des composés de type acide adipique bishydrazide et/ou diamine et/ou bisaldéhyde également présents dans le latex.

De même, lors de sa préparation, la composition de revêtement peut également faire l'objet de l'addition de composés de type polyisocyanate, mélamine, époxysilane, aminosilane, époxy, polyaziridine ou carbodiimides aptes à réticuler avec les groupes des monomères fonctionnels type f) introduits au préalable lors de la synthèse de la dispersion et choisis parmi les monomères éthyléniquement insaturés hydroxylés ou aminés, comme les (méth)acrylates d'hydroxyalkyle en C₂-C₄, de préférence le méthacrylate de 2-hydroxyéthyl (HEMA) et le méthacrylate de tertiobutyl amino éthanol (MATBAE) ou avec les groupes carboxyliques des monomères de type b), les groupes carboxyliques résiduels selon b) étant, dans ce cas, en proportions telles que les conditions essentielles de l'invention concernant les composants b), c), y compris le rapport c/b+c continuent d'être respectées.

Les réactions sont alors préférentiellement de type monomère insaturé aminé / carbodiimide, monomère insaturé hydroxylé / mélamine ou polyisocyanate.

Un objet supplémentaire de l'invention est l'utilisation de la dispersion de l'invention comme revêtement protecteur pour substrats métalliques ou plastiques ou un revêtement primaire d'adhérence ou primaire anticorrosion ou peinture anticorrosion et plus préférentiellement comme revêtement pour protection anticorrosion de substrats métalliques. Le revêtement sur substrats métalliques ou plastiques peut être réalisé en une ou plusieurs couches et peut être pigmenté ou non pigmenté. L'épaisseur d'une couche de revêtement peut varier en général de 10 à 150 microns et de préférence de 20 à 120 microns à sec.

Selon une autre possibilité de l'invention, la composition de revêtement comprend ladite dispersion qui est obtenue à partir d'un mélange de monomères tel que défini selon l'invention et qui comprend en plus jusqu'à 10 parties en poids d'au moins un monomère éthyléniquement insaturé fonctionnel défini selon f) et que ladite composition de revêtement comprend en plus un composé réactif avec les fonctions dudit monomère fonctionnel f). Un cas particulier de revêtement non pigmenté est un vernis pour la protection des plastiques, ayant de bonnes performances d'adhérence et de brillant.

Un dernier objet de la présente invention concerne un substrat métallique ou plastique revêtu d'au moins une couche d'au moins une composition de revêtement telle que définie selon l'invention.

En effet, dans la perspective de réglementations toujours plus contraignantes dans le domaine des émissions de composés organiques volatils COV, le développement de la technologie aqueuse connaît un succès croissant pour le revêtement du métal et des plastiques. Ainsi, les dispersions, en particulier type styrène-acryliques selon l'invention, sont utilisées dans des compositions de revêtements pigmentés ou non, applicables en au moins une couche, de préférence une ou deux ou trois ou même jusqu'à quatre couches de 10 à 150 µm sec par couche, en primaire et/ou en finition sur un substrat exposé à des conditions de service modérées. L'utilisation de ces compositions de revêtements concerne en particulier le marché du revêtement des pièces de l'industrie électro-mécanique, du matériel de transport et de construction, des machines de chantier ou agricoles où des pièces de différentes natures doivent être peintes, ainsi que la protection sur chantier ou en atelier des structures métalliques.

A titre d'illustration de l'invention, les exemples suivants démontrent sans aucune limitation, les performances des dispersions et des revêtements obtenus.

### I/ Matières premières :

a) Matières premières entrant dans la composition du latex :

| **Composé** | **Nature chimique** |
|---|---|
| **Monomères** | |
| ST (Atofina) | Styrène |
| MMA (Atofina) | Méthacrylate de méthyle |
| MABU (Atofina) | Méthacrylate de butyle |
| AE₂H (Atofina) | Acrylate de-2 éthyle hexyle |
| A(M)A (Atofina) | Acide (méth)acrylique |
| AN | Acrylonitrile |
| DAAM (DSM) | Diacétone acrylamide |
| Sipomer PAM 100 (Rhodia) | Méthacrylate d'éthyle phosphate éthoxylé |
| Polysurf HP (ADDP Polysurf) | Méthacrylate de phospho éthyle |
| | |
| **Initiateurs** | |
| Na₂S₂O₈ | Persulfate de sodium |
| TBHP | t-Butyl hydroperoxyde |
| | |
| **Activateurs** | |
| SFS | Formaldéhyde sulfoxylate de Na |
| | |
| **Additifs** | |
| Rhodafac^{®} RS 610 (Rhodia) | Tensioactif anionique : phosphate d'alkyle éthoxylé (6 OE), de formule C₁₃H₂₇-(O-CH₂-CH₂-)₆-O-P(O)(OH)₂, en solution à 25% neutralisé à pH = 7 (ammoniaque). |
| Disponil^{®} A 3065 (Cognis) | Tensioactif non-ionique : alcool gras C₁₂-C₁₄-OE :30 |
| | |
| **Divers** | |
| Acticide LA (Thor) | Biocide |
| AABH (DSM) | Acide adipique bis hydrazide (solution à 8% dans eau) |

b) Matières premières entrant dans la formulation du primaire :

| **Constituant** | **Fonction** | **Nature chimique** | **Fournisseur** |
|---|---|---|---|
| Kathon LXE | Biocide | Méthyl - et chloro-isothiazolinone | Rôhm & Haas (USA) |
| Byk 151 | Dispersant pigmentaire | Sel alkyle ammonium d'un polymère poly-fonctionnel en solution | BYK (Ge) |
| Surfynol 104PG | Agent mouillant | Octyne diol en solution dans PG | Air Products |
| Tiona RCL 535 | Pigment | Dioxyde de titane | MILLENIUM (UK) |
| Heucophos ZCPP | Pigment actif anticorrosion | Phospho-alumino-silicate mixte de Zn et Ca | HEUBACH (Ge) |
| Plastorit micro | Charge | Combinaison naturelle de mica et de quartz | Luzenac-Naintsch |
| Byk 024 | Additif antimousse | siliconé | BYK |
| Emadox NA | Additif anti-corrosion instantanée | Solution de nitrite de sodium | LABEMA (Fr) |
| Texanol | Agent coalescent | Iso-butyrate de triméthylpentane diol | Eastman (USA) |
| Aquaflow NLS 200 | Epaississant associatif non-ionique | Polyol poly-éther modifié hydrophobe | HERCULES-AQUALON |
| Acrysol RM2020 | Epaississant associatif non-ionique | Polyuréthane poly-éther modifié hydrophobe | RÖHM & HAAS |
| Tego Foamex 7447 | Agent débullant | Composé siliconé | DEGUSSA-TEGO |

### II/ Composition et mise en oeuvre des latex :

### Exemple Ia :

Chauffage à 85°C d'un pied de cuve contenant 79 parties d'eau et 1,30 parties de Rhodafac^{®} RS 610 (Rhodia) à 25% d'extrait sec et préalablement neutralisé à pH = 9-10 par de l'ammoniaque à 28%.

Ensemencement à 85°C à l'aide de 5% d'une pré-émulsion neutralisée à pH = 4,5 par de l'ammoniaque et constituée de 33 parties d'eau, 1,50 parties de Rhodafac^{®} RS 610 (ES : 25%), 25 parties de méthacrylate de butyle (BMA), 52 parties de styrène (ST), 19 parties d'acrylate de 2-éthyle hexyle, 3 parties d'acide acrylique et 1 part de PAM 100 (méthacrylate de phospho éthoxy éthyle) et de 20% d'une solution d'amorceur contenant 7 parties d'eau et 0,40 partie de persulfate de sodium Na₂S₂O₈.

Le milieu réactionnel est laissé 5 mn sous agitation et chauffage puis le reste de la pré-émulsion (95%) et de la solution de persulfate de sodium sont écoulés en parallèle pendant respectivement 4 h et 4 h 30. Le milieu est ensuite refroidi à 65°C.

Une étape de réduction des monomères résiduels est ensuite réalisée en coulant en parallèle et pendant 30 min, une solution contenant 1 part d'eau et 0,05 part de (CH₃)₃COOH (ES : 70%) et une solution contenant 1 part d'eau pour 0,04 part de l'activateur SFS (ES : 76,6%).

Post additions : ajout progressif et sous agitation d'une solution aqueuse de Disponil^{®} A3065 (1/1 dans l'eau) à raison de 1% de Disponil^{®} A3065 actif sur polymère sec, rinçage et maintien sous agitation et à température de réaction, pendant 30 à 45 minutes.

Neutralisation NH₄OH après refroidissement à 30°C.

Ajout de biocide à température ambiante.

### Exemple Ib : (contre-exemple)

Même procédé que pour exemple la en ramenant les quantités d'acide acrylique et de PAM 100 respectivement à 2 parties en poids.

### Exemples IIa à IVc :

Même procédé que pour l'exemple la avec néanmoins des variations de quantités et de nature de monomères et comonomères, des quantités d'acides acryliques et PAM 100/ ou PEM (Méthacrylate de phosphoéthyle) et d'éventuelles post-modifications (cf. tableau I). De même, l'addition d'acide adipique bishydrazide dans les exemples IIa et IId, s'effectue en fin de procédé, après neutralisation par NH₄OH. Par contre, la diacétone acrylamide de l'exemple IIa est introduite à la fin de l'alimentation en monomères.

Les exemples IIc, IIIc, IVb et IVc sont hors invention.

### Exemple V :

Essai réalisé selon : Example 3 : Polymer Sample 7 de EP 1 193 298 A1 pages 7 et 8 (cf. tableau I).

### III/ Mise en oeuvre et tests des films :

### 1/ Formulations des primaires sur métal, finitions TC DTM et vernis :

Ci-dessous les formulations de primaires sur métal a), de finitions TC DTM b) (« top coat direct to metal ») et de vernis c) sur lesquelles ont été menés les tests d'évaluation.

| **Formulation** | **a) Primaire** | **b) Finition TC DTM** | **c) Vernis** |
|---|---|---|---|
| **Constituants** | **Quantité (g)** | **Quantité (g)** | **Quantité (g)** |
| Latex (45 % d'ES) | - | | 888.9 |

| ***Dispersion pigmentaire*** | | | 0 |
|---|---|---|---|
| Eau | 100.1 | 58.3 | - |
| Kathon LXE | 1.4 | 0.2 | - |
| Byk 151 | 6.6 | 6.9 | - |
| Surfynol 104 PG 50 | 2.4 | - | - |
| TEGO LA-W 1006 | - | 2.0 | 4.5 |
| Butyl glycol ether | - | 19.8 | 44.4 |
| Ammoniaque à 20% | 1.0 | 0.9 | - |
| Tiona RCL 535 | 79.9 | 242.0 | - |
| Heucophos ZCPP | 60.7 | - | - |
| Plastorit MICRO | 109.2 | - | - |
| BYK 024 | 1.0 | 1.0 | - |
| EMADOX NA | 3.5 | 3.6 | - |

| ***Ajout sous agitation modérée*** | | | |
|---|---|---|---|
| Latex (45 % d'ES) | 574.9 | 610.2 | - |
| Texanol | 31.8 | 25.7 | 62.2 |
| Aquaflow NLS 200 | 1.5 | - | - |
| Acrysol RM-2020 | 4.5 | 5.2 | - |
| Byk 024 | 1.0 | 1.0 | - |
| Tego Foamex 7447 | 1.0 | 1.0 | - |
| Eau | 19.5 | 22.2 | - |
| | | | |

| **Caractéristiques** | **Primaire** | **Finition TC DTM** | **Vernis** |
|---|---|---|---|
| Densité | 1,24 | 1.26 | |
| Extrait sec en poids (%) | 51,74 | 52.6 | |
| Extrait sec en volume (%) | 40,0 | 40.0 | |
| | | | |

| **Caractéristiques du film** | **Primaire** | **Finition TC DTM** | **Vernis** |
|---|---|---|---|
| Densité | 1,60 | 1.65 | |
| CPV (avec adjuvant) | 24,41 | 18.5 | 0 |
| CPV (sans adjuvant) | 25,00 | 19.0 | 0 |

### 2/ Application et tests des revêtements :

### 2/a Primaires sur métal

Opacité RY: la qualité de la dispersion pigmentaire est évaluée sur la base de l'opacité du film appliqué sur carte Lénéta blanc / noir 2A. L'opacité RY est le rapport de contraste RY des valeurs de Y mesurées respectivement sur le film de peinture appliqué à 150 µm humide sur les parties noires et blanches de la carte Lénéta (% Y du film appliqué sur la partie noire / % Y du film appliqué sur la partie blanche).

Tenue au brouillard salin continu : les primaires sont appliqués en film d'épaisseur d'environ 75 µm (film sec) sur panneaux d'acier laminé à froid dépoli, référencés Q-Panel S36 (Labomat). Après un séchage de 4 jours à température ambiante et 72 heures à 50°C, les éprouvettes sont conditionnées 24 h à 23°C sous 50% d'humidité relative puis soumises à un vieillissement accéléré de 240 h au brouillard salin selon la norme NF ISO 9227.

Le cloquage et la rouille sont évalués selon deux méthodes :
- sur une partie non entaillée,
   évaluation du cloquage selon la norme ISO 4628/2
   évaluation de la rouille selon la norme ISO 4628/3
- sur une partie entaillée en forme de croix, le cheminement de la corrosion est évalué selon 2 méthodes :
   - épaisseur du trait de rouille : mesure de la largeur du cordon de rouille (mm)
   - cloquage : mesure de la largeur de la zone soulevée par le cloquage (mm)

Après 2 h de conditionnement à 23°C sous 50% d'humidité relative, l'adhérence du film sur le substrat est testée selon la norme ISO 2409 sur la zone non-entaillée, par quadrillage et arrachement du ruban adhésif 3M 610. L'adhérence sur partie entaillée en croix est évaluée par simple arrachement du ruban adhésif directement appliqué sur la zone entaillée.

L'ensemble des résultats obtenus sur les primaires sont présentés au tableau II/a.

### 2/b Finitions « TC DTM » brillante

Les latex utilisés en peinture brillante de CPV = 19 selon la formulation 1/b) ont été soumis aux évaluations suivantes :
Brillant : la brillance des films appliqués à 200 µm humide sur verre est mesurée après 1 semaine de séchage en conditions contrôlées à 25°C et à 50 % d'humidité relative au Micro-Tri-Gloss-meter de Byk-Gardner.
Tenue au brouillard salin continu : les peintures ont été testées dans deux systèmes distincts :
   soit système TC DTM (« top coat direct to metal ») : peintures appliquées directement sur le métal à une épaisseur d'environ 50 µm sur les panneaux référencés Q-Panels S36 (voir 2/a)),
   - soit système PR + TC (« primer + top coat») : après 24 h de séchage, les peintures en finition appliquées à environ 30 µm sur un primaire formulé avec le latex de composition IId du tableau I, le primaire étant lui-même appliqué à une épaisseur d'environ 50 µm sur panneaux Q-Panel S36.

Les éprouvettes sont conditionnées, vieillies et évaluées comme décrit ci-dessus pour les primaires.

L'ensemble des résultats obtenus sur les finitions TC DTM sont présentés au tableau II/b.

### 2/c Vernis

Le vernis formulé avec le latex de composition IIId du tableau I est dilué avec de l'eau jusqu'à une viscosité Coupe Forte CF4 de 31 secondes et un ES = 39%. Le vernis est appliqué au bar coater à 50 µm humide sur un feuil de polypropylène (PP) transparent de 80 µm traité Corona ou sur du polystyrène choc (High Impact Polystyrene HIPS). Après 15 min de séchage à l'ambiante, le film est mis à l'étuve pendant 30 min à 50°C. Le film est ensuite conditionné 60 h à 23°C et à 50% d'humidité relative avant la réalisation des essais.

Le film est clair et régulier, de dureté crayon HB.

Le film est flexible et résiste à un double pliage serré du polypropylène (PP) sans fissuration ni délamination au creux du pli. Il adhère aussi sur HIPS par quadrillage et arrachement au ruban 3M 610.

Blocking test : 2 films sont pressés face contre face à une température et une pression donnée, et pendant un temps donné, puis les 2 films sont décollés, et la détérioration des films est évaluée. Le résultat est exprimé sur une échelle de 1 à 5, où 1 signifie que les 2 films adhèrent l'un à l'autre et qu'ils se détériorent quand on les détache, et 5 indique un collant nul.
- Blocking après 16 h à 23°C et 50% d'humidité relative sous P =1 kg/cm² : le résultat est 5 sur l'échelle, ce qui signifie aucun collant.
- Blocking après 72 h à 60°C et 70% d'humidité relative sous P = 0.5 kg/cm² : le résultat est 1, ce qui signifie que les 2 films adhèrent l'un contre l'autre et qu'ils se détériorent lorsqu'on les sépare.

Le film résiste aux agents chimiques :
- Ethanol 100% sur PP : le film résiste 30 minutes mais tache après un contact prolongé,
   Ethanol 100% sur HIPS : après 10 aller-retour avec un feutre imbibé de solvant, le film est attaqué en surface,
- Solution concentrée de détergent industriel (Teepol et lave vitre) : le film résiste 24 h sans tache,
- Crème pour main : le film résiste 7 h, mais tâche après un contact prolongé.

### 3/ Commentaires des résultats :

### 3/a Primaires sur métal

Les résultats présentés au tableau IIa illustrent la nécessité que le polymère contienne un taux suffisant d'acide, majoritairement carboxylique, pour atteindre un compromis suffisant de performances, en particulier la dispersion pigmentaire et la stabilité de la formulation. Ce taux est déterminé par l'hydrophobie des comonomères et par la CPV du revêtement. L'introduction d'un système réticulant covalent dans la composition IIa améliore l'effet protecteur du revêtement.

### 3/b Finition TC DTM

Les latex de l'invention utilisés dans une formulation de finition brillante sont appliqués aussi bien en système TC DTM qu'en système PR + TC, et ils présentent une meilleure tenue à la corrosion qu'un latex représentatif du marché pour l'application métal désigné par BM (Bench Mark) dans le tableau IIb, mais aussi que les latex de composition homologue, dont le taux relatif d'acide fort (c/b+c) est supérieur à 0,4.

### 3/c Vernis

Le latex de composition IIId présente un bon niveau de performances tant en application sur métal que sur plastique.

**Tableau I :**

| **Ex.** | **Composition** | | | | | | | | | **Paramètres** | | **Caractéristiques** | | | | |
|---|---|---|---|---|---|---|---|---|---|---|---|---|---|---|---|---|
| | **ST** | **MMA** | **AN** | **MABU** | **AE₂H** | **AA ou AMA*** | **PAM 100 ou Polysurf HP**** | **DAAM** | **AABH Post-Ajouté** | **b+c** | **c/(b+c)** | **ES (%)** | ∅ **(nm)** | **pH** | **TMF (°C)** | **Tg (°C)** |
| **Ia** | 52 | | | 25 | 19 | 3 | 1 | | | 4 | 0,25 | 44,1 | 89 | 8,5 | 41 | 31 |
| **Ib** | 52 | | | 25 | 19 | 2 | 2 | | | 4 | 0,50 | 45,2 | 75 | 8,5 | 40 | 30 |
| **IIa** | 9 | | | 25 | 19 | 4 | 1 | 2 | 1.6 | 5 | 0,20 | 45,5 | 79 | 8,0 | 42 | 34 |
| **IIb** | 51 | | | 25 | 19 | 4 | 1 | | | 5 | 0,20 | 45,4 | 81 | 8,1 | 45 | 30 |
| **IIc** | 51 | | | 25 | 19 | 1,5 | 3.5 | | | 5 | 0,70 | 44,6 | 72 | 8,1 | 41 | 30 |
| **IId** | 51 | | | 25 | 19 | 6 | 1 | | 0.25 | 7 | 0,14 | 44,0 | 87 | 8,2 | 41 | 30 |
| **IIe** | 51 | | | 25 | 19 | 6 | 1 | | | 7 | 0,14 | 44,4 | 87 | 8,2 | 41 | 30 |
| **IIf** | 46 | | | 26 | 19 | 7 | 1 | | | 8 | 0.12 | 44,5 | 118 | 8,0 | 41 | 31 |
| **IIg** | 37 | 30 | | | 26 | 6 | 1 | | | 7 | 0,14 | 44,4 | 100 | 8,0 | 51 | 34 |
| | | | | | | | | | | | | | | | | |
| **IIIa** | 33 | | | 51 | 11 | 4* | 1 | | | 5 | 0,20 | 44,9 | 94 | 8,0 | 42 | 33 |
| **IIIb** | 33 | | | 51 | 11 | 4 | 1 | | | 5 | 0,20 | 44,2 | 155 | 8,2 | 33 | 31 |
| **IIIc** | 33 | | | 51 | 11 | 2* | 3 | | | 5 | 0,60 | 45,0 | 95 | 8,2 | 33 | 32 |
| **IIId** | 32 | | | 50 | 10 | 5 | 1 | 2 | 1.6 | 6 | 0.17 | 45 | 90 | 7.7 | 44 | 34 |
| | | | | | | | | | | | | | | | | |
| **IVa** | 27 | | 25 | | 43 | 4* | 1 | | | 5 | 0,20 | 44,2 | 81 | 8,1 | 32 | |
| **IVb** | 27 | | 25 | | 43 | 2.5* | 2,5* | | | 5 | 0,50 | 44,1 | 83 | 7,7 | 34 | 2 |
| **IVc** | 27 | | 25 | | 43 | 2.5* | 2,5 | | | 5 | 0,50 | 43,7 | 93 | 8.0 | 30 | 2 |
| | | | | | | | | | | | | | | | | |
| **V** | 29,8 | 2,92 | 19.5 | | 43,9 | 1* | 2,85** | | | 3,85 | 0,74 | 47,1 | 108 | 8.3 | 20 | 0 |

| | | | | | | | | | | | | | | | | |
|---|---|---|---|---|---|---|---|---|---|---|---|---|---|---|---|---|
| ES = Extrait sec Ø = taille des particules pH = pH du latex après neutralisation TMF = Température minimum de formation de film Tg = Température de transition vitreuse | | | | | | | | | | | | | | | | |

**Tableau IIa : Performances des latex en formulation primaires**

| | | | | | | **Brouillard salin continu** | | | | | |
|---|---|---|---|---|---|---|---|---|---|---|---|
| | | | | | | **Partie non entaillée** | | | | **Sur croix** | |
| **Exemples** | **b+c** | **c/ (b+c)** | **Synthèse** | **Stabilité Primaire** | **Opacité RY** | **Dimension Cloquage (0 à 5)** | **Densité Cloquage (0 à 5)** | **Rouille (0 à 5)** | **Adhérence (0 à 5)** | **Epaisseur trait de rouille (mm)** | **Cloquage (mm)** |
| **Ia** | 4 | 0,25 | B | TM | 90,3 | 0 | 0 | 0 | 3 | 0 | <5 |
| **IIa** | 5 | 0,20 | TB | TB | 90,9 | 2 | 1 | 0 | 2 | 0,1 | <15 |
| **IIb** | 5 | 0,20 | TB | TB | 91.5 | 4 | 3 | 2 | 1 | 0.1 | >20 |
| **IIc** | 5 | 0, 70 | TB | TM | 90,1 | 1 | 1 | 0 | 4 | 0 | <5 |
| **Ib** | 4 | 0,50 | TB | AB | 90,3 | 0 | 0 | 0 | 4 | 0,3 | <3 |
| **IId** | 7 | 0,14 | TB | B | 91,6 | 0 | 0 | 0 | 5 | 0 | <3 |
| **IIe** | 7 | 0,14 | TB | TB | 91,4 | 1,5 | 1 | 0 | 5 | 0 | <3 |
| **IIf** | 8 | 0.12 | B | AB | 91,7 | 1 | 3 | 0 | 4 | 0 | <10 |
| **IIg** | 7 | 0,14 | AB | B | 92,2 | 2 | 2 | 0 | 5 | 0 | <5 |
| **IIIa** | 5 | 0,20 | TB | M | 89,9 | 0 | 0 | 0 | 5 | 0,1 | <6 |
| **IIIb** | 5 | 0,20 | B | TB | 90,4 | 1 | 1 | 0 | 5 | 0 | <4 |
| **IIIc** | 5 | 0,60 | M-AB | TM | 89,6 | 1,5 | 3 | 1 | 5 | 0,1 | >20 |
| **IVa** | 5 | 0,20 | TB | B | 92,1 | 0 | 0 | 0 | 0 | 0 | 0 |
| **IVb** | 5 | 0,50 | B | TB | 92,6 | 3 | 3 | 2 | 0.5 | 0,5 | <5 |
| **IVc** | 5 | 0,50 | TB | AB | 90,9 | 3,5 | 3 | 1 | 1 | 1,5 | <6 |
| **V** | 3,85 | 0,74 | B | AB | 92,6 | 2,5 | 5 | 5 | 4 | 1,5 | >20 |

| | | | | | | | | | | | |
|---|---|---|---|---|---|---|---|---|---|---|---|
| Synthèse et stabilité pigmentaire: TB = Très Bien, B = Bien, AB Assez Bien, M = Médiocre, TM = Très Médiocre Adhérence selon ISO 2409 : 0 = pas d'arrachement 5 = plus de 65% du film arraché Dimension cloquage selon norme ISO 4628/2 Densité cloquage selon norme ISO 4628/2 Rouille selon norme ISO 4628/3 | | | | | | | | | | | |

**Tableau IIb : Performances des latex en formulation de finitions TC DTM et PR + TC**

| | | | | **Tenue au brouillard salin continu en système TC DDM** | | | | | |
|---|---|---|---|---|---|---|---|---|---|
| | | | | **Partie non entaillée** | | | | **Sur croix** | |
| **Exemples** | **b+c** | **c/ (b+c)** | **Gloss 20° (%)** | **Cloquage taille (0 à 5)** | **Cloquage Densité (0 à 5)** | **Rouille (0 à 5)** | **Adhérence (0 à 5)** | **Epaisseur trait de rouille (mm)** | **Cloquage (mm)** |
| **Ia** | 4 | 0,25 | 46 | 1 | 3 | 0 | 4 | 1 | 10 |
| **Ib** | 4 | 0,50 | 57 | 2 | 2 | 0 | 5 | 1. 5 | 15 |
| **IIIa** | 5 | 0,20 | 51 | 0 | 0 | 0 | 4 | 1 | 10 |
| **IIIb** | 5 | 0,20 | 50 | 1 | 3 | 1 | 5 | 1 | >20 |
| **IIIc** | 5 | 0,60 | 38 | 2 | 5 | 2 | 5 | 1 | > 15 |
| **IIId** | 6 | 0.17 | 29 | 2 | 3 | 4 | 0 | 0.5 | 10 |
| **V** | 3,85 | 0,74 | 54 | 5 | 4 | 3 | 5 | 1 | >15 |
| **BM** | | | 51 | 4 | 5 | 4.5 | 5 | 1 | > 15 |
| | | | | | | | | | |

| | | | | **Tenue au brouillard salin continu en système PR + TC** | | | | | |
|---|---|---|---|---|---|---|---|---|---|
| | | | | **Partie non entaillée** | | | | **Sur croix** | |
| **Exemples** | **b+c** | **c/ (b+c)** | **Gloss 20° (%)** | **Cloquage taille (0 à 5)** | **Cloquage densité (0 à 5)** | **Rouille (0 à 5)** | **Adhérence (0 à 5)** | **Epaisseur trait de rouille (mm)** | **Cloquage (mm)** |
| **Ia** | 4 | 0,25 | 46 | 1 | 2 | 0 | 0 | 1 | 2 |
| Ib | 4 | 0,50 | 57 | 0 | 0 | 0 | 0 | 12 | 0 |
| **IIIa** | 5 | 0,20 | 51 | 0 | 0 | 0 | 0 | 0.2 | 2 |
| **IIIb** | 5 | 0,20 | 50 | 0 | 0 | 0 | 0 | 1 | 0 |
| **IIIc** | 5 | 0,60 | 38 | 0 | 0 | 1 | 3 | 1 | 0 |
| **IIId** | 6 | 0,17 | 29 | 1 | 1 | 0 | 0 | 0.5 | 10 |
| **V** | 3,85 | 0,74 | 54 | 0 | 0 | 0 | 5 : rupture à l'interface primer-topcoat | 1 | 3 |
| **BM** | | | 51 | 1 | 2 | 0 | 5 | 1 | 3 |

## Revendications

1. Dispersion aqueuse de polymère **caractérisée en ce que** ledit polymère peut s'obtenir à partir d'un mélange de monomères, comprenant, en poids :
a) 100 parties d'au moins un monomère éthyléniquement insaturé ne comportant pas de groupement ionique,
b) 0,5 à 15 parties d'au moins un monomère éthyléniquement insaturé porteur d'au moins une fonction carboxylique et/ou anhydride carboxylique,
c) au moins un monomère éthyléniquement insaturé porteur d'au moins une deuxième fonctionnalité sélectionnée parmi : phosphate, phosphonate, phosphinate, en quantité telle que le rapport c/(b+c) varie de 0,05 à 0.4,
d) 0 à 2 parties d'au moins un monomère éthyléniquement insaturé porteur d'au moins une fonction alcoxysilane,
e) 0 à 5 parties d'au moins un monomère éthyléniquement insaturé porteur d'au moins une fonction carbonyle actif ou d'une autre fonction réactive avec une fonction aldéhyde telle un dérivé uréïdo, ou de la morpholine, de l'imidazoline, de l'oxazolidine, de l'aziridine, ou une fonction amine,
f) 0 à 10 parties, de préférence 2 à 8 d'au moins un monomère éthyléniquement insaturé porteur d'au moins une fonction sélectionnée parmi hydroxy et amine primaire ou secondaire, ou d'un groupe précurseur porteur d'une telle fonction.

2. Dispersion selon la revendication 1, **caractérisée en ce qu'**elle comprend en plus 0 à 5 parties en poids d'au moins un composé polyfonctionnel portant au moins 2 fonctions hydrazide ou amine ou aldéhyde ou d'un groupe précurseur d'une telle fonction additionné après la préparation par polymérisation en émulsion de ladite dispersion.

3. Dispersion selon l'une des revendications 1 à 2, **caractérisée en ce que** le monomère a) est sélectionné parmi : le styrène et ses dérivés, les esters (méth)acryliques d'alcools en C₁ à C₁₈, l'acrylonitrile, les esters vinyliques tels que ceux de l'acide versatique.

4. Dispersion selon l'une des revendications 1 à 3, **caractérisée en ce que** le monomère b) est sélectionné parmi les acides (méth)acrylique, maléique, itaconique, fumarique, vinylbenzoïque et crotonique ou isocrotonique et/ou leurs anhydrides.

5. Dispersion selon l'une des revendications 1 à 4, **caractérisée en ce que** le monomère éthyléniquement insaturé c) porteur d'au moins une deuxième fonctionnalité est porteur d'une fonction de type phosphate, selon une des formules générales suivantes : 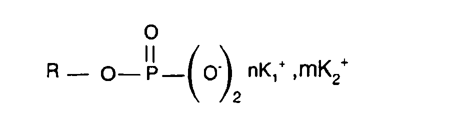 ou phosphonate 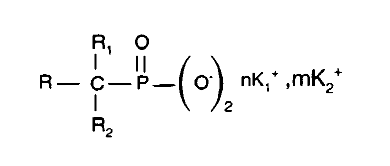 ou phosphinate 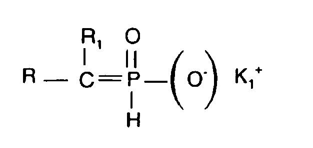 où :
- R est un radical organique, comprenant une insaturation éthylénique pouvant être (méth)acrylique, vinylique ou allylique, ledit radical organique R pouvant comprendre en plus dans sa structure une chaîne polyalcoxylée, comprenant des unités alcoxy choisies parmi oxyéthylène (OE) et/ou oxypropylène (OP), de préférence oxyéthylène (OE) et avec un nombre d'unités alcoxy allant de 1 à 30, préférentiellement de 1 à 10,
- R₁ et R₂ pouvant être H, ou alkyle C₁-C₂,
- K₁⁺ et K₂⁺ sont un H⁺ ou un cation métallique alcalino-terreux monovalent, n et m sont chacun égaux à 0, 1 ou 2 tel que n + m = 2.

6. Dispersion selon l'une des revendications 1 à 5, **caractérisée en ce que** ladite dispersion comprend 0,5 à 5 parties d'au moins un tensioactif pour 100 parties de a).

7. Dispersion selon l'une des revendications 1 à 6, **caractérisée en ce qu'**elle comprend au moins un tensioactif anionique ou non ionique ou une combinaison d'au moins un tensioactif anionique et d'au moins un tensioactif non ionique.

8. Dispersion selon les revendications 6 ou 7, **caractérisée en ce qu'**au moins un tensioactif comporte une insaturation alpha-béta éthylénique copolymérisable avec les monomères a), b), c), d), e) et f).

9. Dispersion selon l'une des revendications 1 à 8, **caractérisée en ce qu'**elle contient au moins un tensioactif anionique phosphate d'alkyle alcoxylé.

10. Dispersion selon la revendication 9, **caractérisée en ce que** ledit tensioactif est un polyéther ester phosphate d'alkyle alcoxylé, ledit alkyle étant en C₁₂, C₁₃ ou C₁₄, et ledit alcoxy étant un oxyéthylène.

11. Dispersion selon l'une des revendications 1 à 10, **caractérisée en ce que** ladite dispersion comporte au moins 2 polymères distincts de Tg différentes :
soit sous forme de mélanges de particules de polymères distincts,
- soit sous forme de particules structurées, constituées d'au moins 2 phases de polymères distincts.

12. Dispersion selon la revendication 11, **caractérisée en ce que** lesdites particules sont structurées selon une structure coeur / écorce et qu'au moins un des monomères b) ou c) ou d) ou e) ou f) est présent en prédominance dans l'une desdites phases.

13. Dispersion selon l'une des revendications 11 à 12, **caractérisée en ce qu'**elle peut être obtenue :
- soit par mélange d'au moins 2 dispersions de polymères de Tg et de fonctionnalités distinctes,
- soit dans le cas de particules structurées, par un procédé de polymérisation comportant au moins deux étapes successives avec des compositions de monomères distinctes.

14. Procédé de préparation de la dispersion aqueuse telle que définie selon l'une des revendications 1 à 13, **caractérisé en ce qu'**il comprend au moins les étapes suivantes :
i) polymérisation d'au moins une composition de monomères telle que définie selon l'une des revendications 1 à 10,
ii) en option, mélange d'au moins deux dispersions aqueuses obtenues selon l'étape i) et chacune de ces dispersions comprenant des polymères de Tg différentes.

15. Procédé selon la revendication 14, **caractérisé en ce qu'**il comprend au moins les étapes suivantes :
i) polymérisation en au moins une étape d'une composition de monomères telle que définie par l'une des revendications 1 à 10.
ii) polymérisation en au moins une étape d'au moins une deuxième composition de monomères telle que définie selon l'une des revendications 1 à 10, cette deuxième composition pouvant donner un polymère de Tg différente de celle de l'étape i) et/ou au moins un des monomères b) ou c) ou d) ou e) ou f) pouvant être en proportion prédominante dans l'une desdites compositions de monomères.

16. Composition de revêtement **caractérisée en ce qu'**elle comprend au moins une dispersion telle que définie selon l'une des revendications 1 à 13 ou obtenue selon un procédé tel que défini selon l'une des revendications 14 ou 15.

17. Composition de revêtement selon la revendication 16, **caractérisée en ce que** ladite dispersion est obtenue à partir d'un mélange de monomères tel que défini selon les revendications 1 à 10, qui comprend en plus jusqu'à 10 parties en poids d'au moins un monomère éthyléniquement insaturé fonctionnel tel que défini selon la revendication 1 au point f) et que ladite composition de revêtement comprend en plus un composé réactif avec les fonctions dudit monomère fonctionnel.

18. Composition de revêtement selon l'une des revendications 16 ou 17, **caractérisée en ce que** ledit revêtement est un revêtement protecteur pour substrats métalliques ou plastiques.

19. Composition de revêtement selon la revendication 18, **caractérisée en ce que** ledit revêtement est un primaire d'adhérence ou d'anticorrosion ou une peinture anticorrosion.

20. Composition de revêtement selon l'une des revendications 16 à 19, **caractérisée en ce que** ledit revêtement est un revêtement pigmenté applicable en au moins une couche.

21. Utilisation de la dispersion telle que définie selon l'une des revendications 1 à 13 ou obtenue selon le procédé défini selon l'une des revendications 14 ou 15 dans des compositions de revêtement pour la protection de substrats métalliques ou plastiques.

22. Utilisation de la dispersion telle que définie selon l'une des revendications 1 à 13 dans des compositions de revêtement pour la protection anticorrosion de substrats métalliques.

23. Utilisation selon l'une des revendications 21 ou 22, **caractérisée en ce que** le revêtement du substrat métallique ou plastique est réalisé en une ou plusieurs couches et qu'il est pigmenté.

24. Utilisation selon l'une des revendications 21 ou 22, **caractérisée en ce que** le revêtement du substrat métallique ou plastique est réalisé en une ou plusieurs couches et qu'il est non pigmenté.

25. Utilisation selon l'une des revendications 21 à 24, **caractérisée en ce que** l'épaisseur d'une couche de revêtement varie de 10 à 150 microns à sec.

26. Substrat métallique ou plastique revêtu d'au moins une couche d'au moins une composition de revêtement telle que définie selon l'une des revendications 16 à 20, ou obtenue selon l'utilisation telle que définie selon l'une des revendications 21 à 25.

## Claims

1. An aqueous polymer dispersion, **characterized in that** said polymer may be obtained from a mixture of monomers comprising, by weight:
a) 100 parts of at least one ethylenically unsaturated monomer not comprising an ionic group;
b) 0.5 to 15 parts of at least one ethylenically unsaturated monomer carrying at least one carboxyl and/or carboxylic anhydride functional group;
c) at least one ethylenically unsaturated monomer carrying at least one second functionality selected from: phosphate, phosphonate or phosphinate, in an amount such that the ratio c/(b+c) varies from 0.05 to 0.4;
d) 0 to 2 parts of at least one ethylenically unsaturated monomer carrying at least one alkoxysilane functional group;
e) 0 to 5 parts of at least one ethylenically unsaturated monomer carrying at least one active carbonyl functional group, or another functional group that reacts with an aldehyde functional group, such as a ureido derivative, morpholine, imidazoline, oxazolidine, aziridine, or an amine functional group;
f) 0 to 10, preferably 2 to 8, parts of at least one ethylenically unsaturated monomer carrying at least one functional group selected from hydroxyl and primary or secondary amine or carrying a precursor group of such a functional group.

2. The dispersion according to claim 1, **characterized in that** it additionally comprises 0 to 5 parts by weight of at least one polyfunctional compound carrying at least two hydrazide or amine or aldehyde functional groups or a precursor group of such a functional group added after said dispersion has been prepared by emulsion polymerization.

3. The dispersion according to claims 1 or 2,
**characterized in that** the monomer a) is selected from:
styrene and its derivatives; C₁ to C₁₈ alcohol (meth)acrylic esters; acrylonitrile; and vinyl esters, such as those of versatic acid.

4. The dispersion according to any one of claims 1 to 3, **characterized in that** the monomer b) is selected from (meth)acrylic, maleic, itaconic, fumaric, vinylbenzoic, crotonic or isocrotonic acids and/or their anhydrides.

5. The dispersion according to any one of claims 1 to 4, **characterized in that** the ethylenically unsaturated monomer c) carrying at least one second functionality is a carrier of a functional group of phosphate type, according to one of the following general formula: 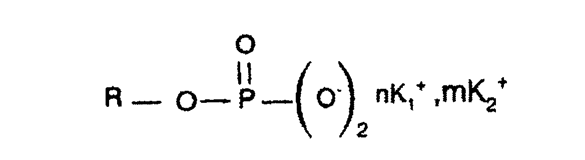 or phosphonate type 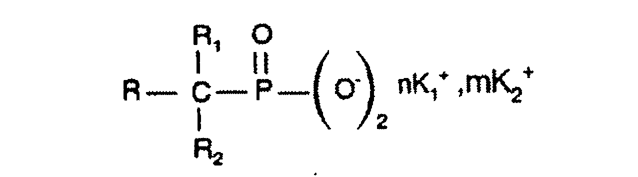 or phosphinate type 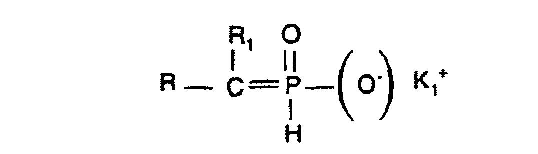 where:
- R is an organic radical, comprising an ethylenically unsaturated group, which may be a (meth)acrylic, vinyl or allyl group, said organic radical R may additionally include in its structure a polyalkoxylated chain, comprising alkoxy units chosen from oxyethylene (OE) and/or oxypropylene (OP), preferably oxyethylene (OE), and with a number of alkoxy units ranging from 1 to 30, preferably from 1 to 10;
- R₁ and R₂ may be H or a C₁-C₂ alkyl ; and
- K₁⁺ and K₂⁺ are an H⁺ or monovalent alkaline-earth metal cation, and n and m are each equal to 0, 1 or 2, so that n + m = 2.

6. The dispersion according to any one of claims 1 to 5, **characterized in that** said dispersion comprises 0.5 to 5 parts of at least one surfactant per 100 parts of a).

7. The dispersion according to any one of claims 1 to 6, **characterized in that** it comprises at least one anionic or nonionic surfactant or a combination of at least one anionic surfactant and of at least one nonionic surfactant.

8. The dispersion according to claims 6 or 7, **characterized in that** at least one surfactant includes an α,β-ethylenic unsaturation copolymerizable with the monomers a), b), c), d), e) and f).

9. The dispersion according to any one of claims 1 to 8, **characterized in that** it contains at least one alkoxylated alkyl phosphate anionic surfactant.

10. The dispersion according to claim 9, **characterized in that** said surfactant is an alkoxylated alkyl polyether ester phosphate, said alkyl being C₁₂, C₁₃ or C₁₄ and said alkoxy being an oxyethylene.

11. The dispersion according to any one of claims 1 to 10, **characterized in that** said dispersion comprises at least two distinct polymers with different glass transition temperatures Tg:
- either in the form of blends of particles of different polymers;
- or in the form of structured particles composed of at least two phases of different polymers.

12. The dispersion according to claim 11, **characterized in that** said particles are structured according to a core/shell structure and that at least one of the monomers b) or c) or d) or e) or f) is present predominantly in one of said phases.

13. The dispersion according to claims 11 or 12,
**characterized in that** it may be obtained:
- either by blending at least two dispersions of polymers with different functionalities and a different Tg,
- or, in the case of structured particles, by a polymerization process comprising at least two successive stages with different monomer compositions.

14. A process for the preparation of the aqueous dispersion as defined in one of claims 1 to 13,
**characterized in that** it comprises at least the following stages:
i) polymerization of at least one monomer composition as defined in one of claims 1 to 10,
ii) optionally, blending of at least two aqueous dispersions obtained according to stage i), each of these dispersions comprising polymers with a different Tg.

15. The process according to claim 14, **characterized in that** it comprises at least the following stages:
i) polymerization in at least one stage of a monomer composition as defined by one of claims 1 to 10,
ii) polymerization in at least one stage of at least one second monomer composition as defined in one of claims 1 to 10, it being possible for this second composition to give a polymer with a different Tg from that of stage i) and/or it being possible for at least one of the monomers b) or c) or d) or e) or f) to be in a predominant proportion in one of said monomer compositions.

16. A coating composition, **characterized in that** it comprises at least one dispersion as defined in one of claims 1 to 13 or obtained by a process as defined in either of claims 14 and 15.

17. The coating composition according to claim 16, **characterized in that** said dispersion is obtained from a monomer mixture as defined in claims 1 to 10 and additionally comprises up to 10 parts by weight of at least one functional ethylenically unsaturated monomer as defined in claim 1 in part f) and **in that** said coating composition additionally comprises a compound that reacts with the functional groups of said functional monomer.

18. The coating composition according to claims 16 or 17, **characterized in that** said coating is a protective coating for metal or plastic substrates.

19. The coating composition according to claim 18, **characterized in that** said coating is an adhesion primer or corrosion-inhibiting primer or a corrosion-inhibiting paint.

20. The coating composition according to any one of claims 16 to 19, **characterized in that** said coating is a pigmented coating applied in at least one coat.

21. The use of the dispersion as defined in one of claims 1 to 13 or obtained by the process defined in either of claims 14 and 15 in coating compositions for the protection of metal or plastic substrates.

22. The use of the dispersion as defined in one of claims 1 to 13 in coating compositions for the corrosion-inhibiting protection of metal substrates.

23. The use according to claims 21 or 22, **characterized in that** the coating of the metal or plastic substrate is applied in one or more coats and **in that** it is pigmented.

24. The use according to claims 21 or 22, **characterized in that** the coating of the metal or plastic substrate is applied in one or more coats and **in that** it is nonpigmented.

25. The use according to any one of claims 21 to 24, **characterized in that** the thickness of a coating coat varies from 10 to 150 microns, when dry.

26. A metal or plastic substrate coated with at least one coat of at least one coating composition as defined according to any one of claims 16 to 20 or obtained according to the use as defined according to any one of claims 21 to 25.

## Patentansprüche

1. Wäßrige Polymerdispersion, **dadurch gekennzeichnet, daß** das Polymer aus einer Monomerenmischung, enthaltend:
a) 100 Gewichtsteile mindestens eines ethylenisch ungesättigten Monomers, das keine ionische Gruppe enthält,
b) 0,5 bis 15 Gewichtsteile mindestens eines ethylenisch ungesättigten Monomers mit mindestens einer Carboxyl- und/oder Carbonsäureanhydridfunktion,
c) mindestens ein ethylenisch ungesättigtes Monomer mit mindestens einer unter Phosphat, Phosphonat und Phosphinat ausgewählten zweiten Funktionalität in einer solchen Menge, daß c/(b+c) von 0,05 bis 0,4 variiert,
d) 0 bis 2 Gewichtsteile mindestens eines ethylenisch ungesättigten Monomers mit mindestens einer Alkoxysilanfunktion,
e) 0 bis 5 Gewichtsteile mindestens eines ethylenisch ungesättigten Monomers mit mindestens einer aktiven Carbonylfunktion oder einer anderen reaktiven Funktion, die gegenüber einer Aldehydfunktion reaktiv ist, wie ein Ureido-, Morpholin-, Imidazolin-, Oxazolidin-oder Aziridinderivat oder eine Aminfunktion,
f) 0 bis 10 Gewichtsteile und vorzugsweise 2 bis 8 Gewichtsteile mindestens eines ethylenisch ungesättigten Monomers mit mindestens einer unter Hydroxy und primärem oder sekundärem Amin ausgewählten Gruppe oder einer Vorläufergruppe einer derartigen Funktion,
erhältlich ist.

2. Dispersion nach Anspruch 1, **dadurch gekennzeichnet, daß** sie außerdem 0 bis 5 Gewichtsteile mindestens einer polyfunktionellen Verbindung mit mindestens 2 Hydrazid-, Amin- oder Aldehydfunktionen oder eine Vorläufergruppe einer derartigen Funktion enthält, die nach der Herstellung der Dispersion durch Emulsionspolymerisation zugegeben worden ist.

3. Dispersion nach einem der Ansprüche 1 bis 2, **dadurch gekennzeichnet, daß** das Monomer a) unter Styrol und seinen Derivaten, (Meth)acrylsäureestern von C₁- bis C₁₈-Alkoholen, Acrylnitril und Vinylestern wie denen von Versaticsäure ausgewählt ist.

4. Dispersion nach einem der Ansprüche 1 bis 3, **dadurch gekennzeichnet, daß** das Monomer b) unter (Meth)acrylsäure, Maleinsäure, Itaconsäure, Fumarsäure, Vinylbenzoesäure und Crotonsäure oder Isocrotonsäure und/oder ihren Anhydriden ausgewählt ist.

5. Dispersion nach einem der Ansprüche 1 bis 4, **dadurch gekennzeichnet, daß** das ethylenisch ungesättigte Monomer c) mit mindestens einer zweiten Funktionalität eine Funktion gemäß einer der folgenden allgemeinen Formeln vom Phosphat-Typ 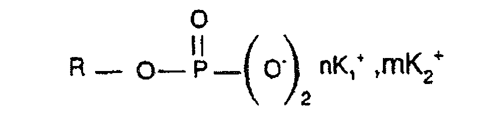 oder vom Phosphonat-Typ 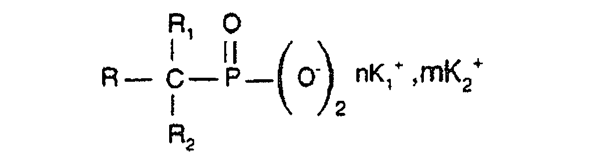 oder vom Phosphinat-Typ 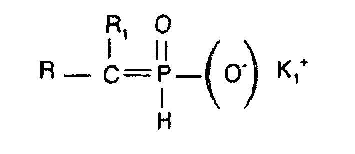 worin:
- R für einen organischen Rest mit einer ethylenischen Ungesättigtheit, bei der es sich um (Meth)acryl, Vinyl oder Allyl handeln kann, steht, wobei der organische Rest R außerdem in seiner Struktur eine polylakoxylierte Kette, die unter Oxyethylen (OE)- und/oder Oxypropylen (OP), vorzugsweise Oxyethylen (OE), ausgewählte Alkoxyeinheiten mit einer Zahl von Alkoxyeinheiten von 1 bis 30, vorzugsweise 1 bis 10, enthält, enthalten kann,
- R₁ und R₂ für H oder C₁-C₂-Alkyl stehen können,
- K₁⁺ und K₂⁺ für H⁺ oder ein einwertiges Erdalkalimetallkation stehen und n und m jeweils gleich 0, 1 oder 2 sind, so daß n + m = 2,
trägt.

6. Dispersion nach einem der Ansprüche 1 bis 5, **dadurch gekennzeichnet, daß** sie 0,5 bis 5 Teile mindestens eines Tensids pro 100 Teile a) enthält.

7. Dispersion nach einem der Ansprüche 1 bis 6, **dadurch gekennzeichnet, daß** sie mindestens ein anionisches oder nichtionisches Tensid oder eine Kombination von mindestens einem anionischen Tensid und mindestens einem nichtionischen Tensid enthält.

8. Dispersion nach Anspruch 6 oder 7, **dadurch gekennzeichnet, daß** mindestens ein Tensid eine mit den Monomeren a), b), c), d), e) und f) copolymerisierbare alpha,beta-ethylenische Ungesättigtheit enthält.

9. Dispersion nach einem der Ansprüche 1 bis 8, **dadurch gekennzeichnet, daß** sie mindestens ein anionisches Tensid vom Typ alkoxyliertes Alkylphosphat enthält.

10. Dispersion nach Anspruch 9, **dadurch gekennzeichnet, daß** es sich bei dem Tensid um ein alkoxyliertes Alkylpolyetheresterphosphat mit C₁₂-, C₁₃- oder C₁₄-Alkylgruppe und Oxyethylen als Alkoxy handelt.

11. Dispersion nach einem der Ansprüche 1 bis 10, **dadurch gekennzeichnet, daß** sie mindestens 2 verschiedene Polymere mit unterschiedlicher Tg
- entweder in Form von Mischungen von Teilchen verschiedener Polymere
- oder in Form von strukturierten Teilchen aus mindestens 2 Phasen verschiedener Polymere
enthält.

12. Dispersion nach Anspruch 11, **dadurch gekennzeichnet, daß** die Teilchen gemäß einer Kern/Schale-Struktur strukturiert sind und in einer dieser Phasen mindestens eines der Monomere b), c), d), e) oder f) überwiegend vorliegt.

13. Dispersion nach einem der Ansprüche 11 bis 12, **dadurch gekennzeichnet, daß** sie
- entweder durch Mischen von mindestens 2 Dispersionen von Polymeren mit verschiedener Tg und verschiedenen Funktionalitäten
- oder im Fall von strukturierten Teilchen durch ein Polymerisationsverfahren mit mindestens zwei aufeinanderfolgenden Schritten mit verschiedenen Monomerenzusammensetzungen erhältlich ist.

14. Verfahren zur Herstellung der wäßrigen Dispersion gemäß einem der Ansprüche 1 bis 13, **dadurch gekennzeichnet, daß** es mindestens die folgenden Schritte aufweist:
i) Polymerisation mindestens einer Monomerenzusammensetzung gemäß einem der Ansprüche 1 bis 10,
ii) gegebenenfalls Mischen von mindestens zwei gemäß Schritt i) erhaltenen wäßrigen Dispersionen, wobei jede dieser Dispersionen Polymere mit unterschiedlicher Tg enthält.

15. Verfahren nach Anspruch 14, **dadurch gekennzeichnet, daß** es mindestens die folgenden Schritte aufweist:
i) Polymerisation mindestens einer Monomerenzusammensetzung gemäß einem der Ansprüche 1 bis 10 in mindestens einem Schritt,
ii) Polymerisation mindestens einer zweiten Monomerenzusammensetzung gemäß einem der Ansprüche 1 bis 10 in mindestens einem Schritt, wobei diese zweite Zusammensetzung ein Polymer mit einer anderen Tg als das Polymer aus Schritt i) ergeben kann und/oder mindestens eines der Monomere b), c), d), e) oder f) in einer der Monomerenzusammensetzungen in überwiegendem Anteil vorliegen kann.

16. Beschichtungszusammensetzung, **dadurch gekennzeichnet, daß** sie mindestens eine gemäß einem der Ansprüche 1 bis 13 definierte oder nach einem Verfahren gemäß einem der Ansprüche 14 oder 15 erhaltene Dispersion enthält.

17. Beschichtungszusammensetzung nach Anspruch 16, **dadurch gekennzeichnet, daß** die Dispersion aus einer Monomerenmischung gemäß den Ansprüchen 1 bis 10, die außerdem bis zu 10 Gewichtsteile mindestens eines funktionellen ethylenisch ungesättigten Monomers gemäß Anspruch 1 Punkt f) enthält, erhalten wird und die Beschichtungszusammensetzung außerdem eine gegenüber den Funktionen des funktionellen Monomers reaktive Verbindung enthält.

18. Beschichtungszusammensetzung nach einem der Ansprüche 16 oder 17, **dadurch gekennzeichnet, daß** es sich bei der Beschichtung um eine Schutzbeschichtung für Metall- oder Kunststoffsubstrate handelt.

19. Beschichtungszusammensetzung nach Anspruch 18, **dadurch gekennzeichnet, daß** es sich bei der Beschichtung um einen Haft- oder Korrosionsschutzprimer oder einen Korrosionsschutzlack handelt.

20. Beschichtungszusammensetzung nach einem der Ansprüche 16 bis 19, **dadurch gekennzeichnet, daß** es sich bei der Beschichtung um eine in mindestens einer Schicht aufbringbare pigmentierte Beschichtung handelt.

21. Verwendung der gemäß einem der Ansprüche 1 bis 13 definierten oder der nach einem Verfahren gemäß einem der Ansprüche 14 oder 15 erhaltenen Dispersion in Beschichtungszusammensetzungen zum Schutz von Metall- oder Kunststoffsubstraten.

22. Verwendung der Dispersion gemäß einem der Ansprüche 1 bis 13 in Beschichtungszusammensetzungen zum Schutz von Metallsubstraten vor Korrosion.

23. Verwendung nach einem der Ansprüche 21 oder 22, **dadurch gekennzeichnet, daß** die Beschichtung des Metall- oder Kunststoffsubstrats in einer oder mehreren Schichten aufgebracht wird und pigmentiert ist.

24. Verwendung nach einem der Ansprüche 21 oder 22, **dadurch gekennzeichnet, daß** die Beschichtung des Metall- oder Kunststoffsubstrats in einer oder mehreren Schichten aufgebracht wird und nicht pigmentiert ist.

25. Verwendung nach einem der Ansprüche 21 bis 24, **dadurch gekennzeichnet, daß** die Trockendicke einer Beschichtungsschicht von 10 bis 150 Mikron variiert.

26. Metall- oder Kunststoffsubstrat, das mit mindestens einer Schicht mindestens einer gemäß einem der Ansprüche 16 bis 20 definierten oder gemäß der Verwendung gemäß einem der Ansprüche 21 bis 25 erhaltenen Beschichtungszusammensetzung beschichtet ist.
